# EUROPEAN PATENT APPLICATION

(11) **EP 1 645 728 A2**
(43) Date of publication of application: **12.04.2006**
(21) Application number: 05021654.8
(22) Date of filing: 04.10.2005
(51) Int. Cl.: F01L 1/18, F01L 1/14, F16H 57/08, F16C 13/00

(54) **Bearing device and supporting shaft for bearing device**

(30) Priority: 07.10.2004 JP 2004295033
(71) Applicant: Koyo Seiko Co., Ltd., Osaka-shi, Osaka 542-8502 (JP)
(72) Inventor: Ochi, Shinya, Koyo Seiko Co., Ltd, Osaka-shi Osaka 542-8502 (JP); Nishiuchi, Jun, Koyo Seiko Co., Ltd, Osaka-shi Osaka 542-8502 (JP); Nishizawa, Chiaki, Koyo Seiko Co., Ltd, Osaka-shi Osaka 542-8502 (JP); Waseda, Yoshitaka, Koyo Seiko Co., Ltd, Osaka-shi Osaka 542-8502 (JP)
(74) Representative: Görz, Ingo

(57) **Abstract**

The bearing devices includes a pair of opposed sidewalls (14a,55), a supporting shaft which is inserted into shaft end insertion holes provided in the both opposed sidewalls (14a,55), and a roller supported between the both opposed sidewalls (14a,55) by the supporting shaft (30,52). The supporting shaft includes a shaft main body (30a,52) that is made of a steel product subjected to a heating process and has a step shape in which the outer diameters (30b,53) of the both shaft ends are smaller than that of a middle portion and caps (33,54) which is fitted to the both shaft ends and of which the end can be caulked. An end outer-diameter side edge of the cap (33,54) is caulked to an inner-diameter side edge of the insertion hole (20).

## Description

### EACKGROUND OF THE INVENTION

The present invention relates to a bearing device and a supporting shaft for the bearing device, and more particularly, to a rocker arm which is installed in a valve operating mechanism of an engine of a vehicle to open or close a valve, a supporting shaft for the rocker arm, a planet gear device for forming an automatic transmission (AT) of a vehicle, and a supporting shaft for the gear. Specially, the present invention relates to a rocker arm in which both ends of a supporting shaft including at the middle portion a raceway surface around which a roller rolls are inserted into shaft-end insertion holes of a pair of opposed sidewalls, a supporting shaft for the rocker arm, a planet gear device, and a supporting shaft for the gear device.

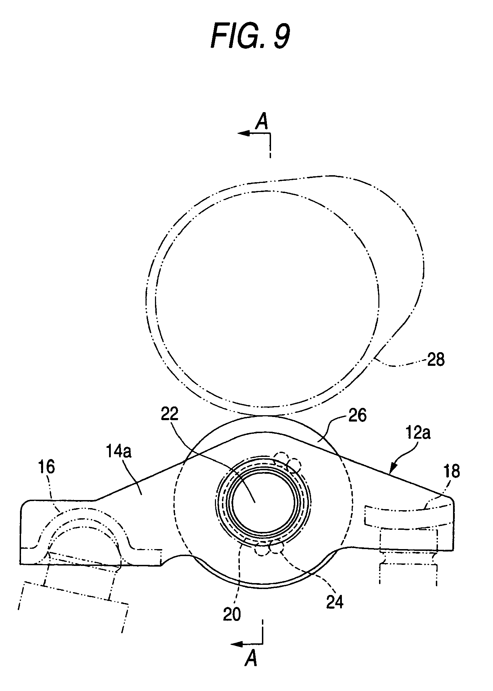

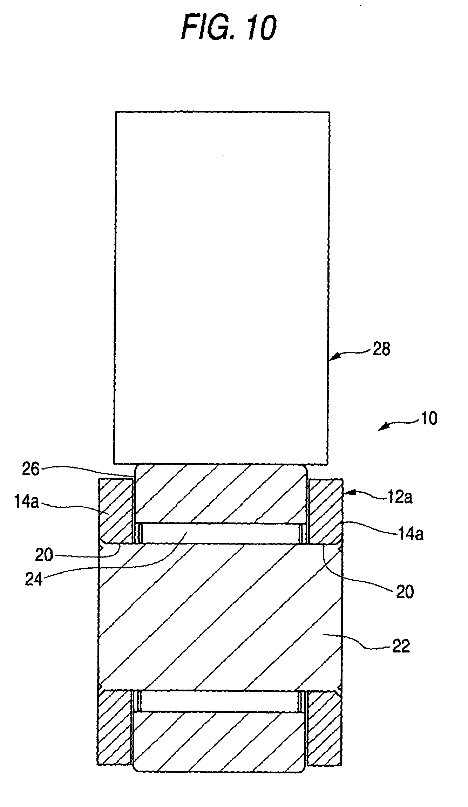

A rocker arm is installed in a valve operating mechanism of an engine of a vehicle and switches a valve of the engine of the vehicle by rotating its body around a lash adjuster receiver (pivot receiver) in accordance with rotation of a valve operating cam. A related rocker arm will be described with reference to Figs. 9 and 10. Fig. 9 is a side view of the rocker arm and Fig. 10 is a cross-sectional view taken along line A-A of Fig. 9. The related rocker arm includes a rocker arm body 12a having a pair of opposed sidewalls 14a. The opposed sidewalls 14a are connected each other through connecting portions at opposite ends in the longitudinal direction, respectively. The connecting portions are a lash adjuster 16 and a valve stem receiver 18, respectively. Shaft-end insertion holes 20 are coaxially formed in the middle portions of the opposed sidewalls 14a in the lengthwise direction. The both shaft ends of a supporting shaft 22 are inserted into the shaft-end insertion holes 20 and the middle portion thereof is laid across the opposed sidewalls 14a. The middle portion of the supporting shaft 22 supports a roller 26 on its outer circumferential surface through a plurality of needle rollers 24 (rolling elements) as a rolling body such that the roller 26 freely rotates. The outer circumferential surface of the roller 26 contacts a cam 28. The end outer-diameter sides of the both shaft ends of the supporting shaft 22 are caulked toward the inner-diameter side edges of the shaft-end insertion holes 20 by an adequate punching tool and the outer-diameter sides of the both shaft ends expand to be prevented from escaping from the shaft-end insertion holes 20. In other words, the supporting shaft 22 is caulked and fixed to the shaft-end insertion holes 20 (see Patent Document 1).

In the rocker arm having the above-described construction, the middle portion of the supporting shaft 22 forms a raceway surface around which the needle rollers 24 roll. In consideration of attachment of an extraneous material on the raceway surface, abrasion of the raceway surface, and reduction of the life span of a bearing due to size down of the rocker arm or increase of a bearing load, requirement for employing the supporting shaft 22 having a high hardness and excellent abrasion resistance or improved life span by a high-concentration carburizing process which makes a surface hard by increasing a carbon concentration or a nitrifying process which makes a surface hard by penetrating activated nitride into the surface of steel has more increased. On the contrary, the both shaft ends of the supporting shaft 22 should have a low hardness for caulking. To this end, in the case where the supporting shaft 22 has a high hardness and excellent abrasion resistance, for example, by the high-concentration carburizing process as described above, although the both shaft ends of the supporting shaft 22 is subjected to a softening process such as anti-carburizing process (process for preventing the both shaft ends from being carburized before the carburizing process), the decarburizing effect may not be sufficiently obtained. Furthermore, instead of the anti-carburizing process, when the middle portion of the supporting shaft 22 is partially quenched (RF-quenched), a cost increases. Moreover, in the case where the both shaft ends as well as the middle portion of the supporting shaft 22 are completely quenched to reduce the cost, if the both shaft ends of the supporting shaft 22 are press-fitted to the shaft-end insertion holes after the complete quenching, the shaft-end insertion holes of the opposed sidewalls or the both shaft ends are apt to be broken or cracked. Accordingly, since the both shaft ends of the supporting shaft 22 should be annealed after the complete quenching, the cost increases.

Furthermore, a planet gear device for forming an automatic transmission (AT) also has the construction (shown in Fig. 10) in which a needle roller is inserted into the middle portion of a supporting shaft and the both shaft ends of the supporting shaft are inserted into opposed shaft-end insertion holes (see Patent Document 2). Even in this construction, the raceway surface around which the needle roller rolls must have a high hardness and improved life span and the both shaft ends must have a low hardness for caulking.
Patent Document 1: Japanese Patent Application Publication No. 2004-156688
Patent Document 2: Japanese Utility Model Application Publication No. 07-22159

### SUMMARY OF THE INVENTION

An object of the invention is to provide a bearing device in which an supporting shaft has a high hardness and excellent abrasion resistance or improved life span by performing a low-cost heating process such as complete quenching, a carburizing process, or a nitrifying process to a supporting shaft and the both shaft ends of the supporting shaft and can be easily caulked to the inner-diameter side edges of insertion holes to be prevented from escaping from the insertion holes while ensuring a mechanical strength, and a supporting shaft for the bearing device such as a rocker arm, a supporting shaft for the rocker arm, a planet gear device, and a supporting shaft for the gear.

According to the present invention, a bearing device comprises a pair of opposed sidewalls for forming a bearing retaining member, a supporting shaft of which the both shaft ends are coaxially inserted into shaft-end insertion holes provided in the both opposed sidewalls, and a roller installed at the middle portion of the supporting shaft between the both opposed sidewalls. Here, the supporting shaft includes a shaft main body that is made of a steel product subjected to a heating process and has a step shape, in which the outer diameter of at least one of the shaft ends is smaller than that of the middle portion thereof, and a cap which is fitted to a small-diameter shaft end, separating from the shaft main body, and has a hardness by which the end of the cap can be caulked. Also, the supporting shaft is inserted into the shaft-end insertion holes in a state that the cap is fitted to the small-diameter shaft end, and fixed to the opposed sidewalls by caulking an end outer-diameter side edge of the cap to an inner-diameter side edge of the shaft-end insertion hole.

The "heating process" of the shaft main body includes a low-cost heating process such as complete quenching. It is preferable that the outer-diameter surface of the middle portion of the supporting shaft is subjected to the heating process as a raceway surface of a roller with a necessary hardness.

The cap may be fitted to the small-diameter shaft end by caulking or press fitting. However, it is preferable that the cap is fitted by caulking the end inner-diameter side edge to the outer-diameter side edge of the small-diameter shaft end such that the shaft removing capability is improved and fretting and creep are prevented from being generated.

Since the supporting shaft is subjected to the heating process with a necessary hardness such that it has improved abrasion resistance or life span, the supporting shaft is made of a steel product such as bearing steel in consideration of the abrasion resistance and the heating process of the bearing steel is preferably complete quenching. The supporting shaft may be made of, for example, carburized steel and the heating process thereof may be carburizing quenching. In addition, the supporting shaft may be made of a steel product such as stainless steel or tool steel and the heating process thereof may be a nitrifying process.

It is preferable that the cap has a hardness (Vickers hardness) of 100 to 400 Hv, by which the end of the cap can be caulked, as an end hardness, and more preferably, 150 to 350 Hv. If the hardness is less than 100 Hv, a caulking strength is low, and, if the hardness is more than 400 Hv, it is impossible to perform the caulking.

If the hardness is ensured, the cap is not specially limited in the material or the heating condition. For example, it is preferable that the cap is made of quenched and tempered steel, mild steel, aluminum, brass, or the like. In the above-described cap, the cap is made of, for example, the quenched and tempered steel, the shaft main body is quenched, the cap is installed on the small-diameter shaft end of the shaft main body, and the end of the cap is caulked, thereby preventing the small-diameter shaft end from escaping.

It is preferable that the supporting shaft is subjected to centerless grinding (although there are various methods, for example, the outer-diameter surface of the cap is grinded by feeding the cap between a grinding stone and a regulating wheel) after the cap is press-fitted and installed in the small-diameter shaft end of the shaft main body.

After the centerless grinding, the outer-diameter surface of the cap may be rolled to improve out-of-roundness. Alternately, the cap may be press-fitted and installed in the small-diameter shaft end of the shaft main body after only the shaft main body is subjected to the centerless grinding.

Furthermore, the grinding of the small-diameter shaft end of the shaft main body is not specially needed. The cap can be loosely fitted to the small-diameter shaft end by roughly setting a turning degree when the small-diameter shaft end is turned. In this case, the cap may be loosely fitted to the small-diameter shaft end by roughly setting a turning degree when the inner-diameter surface of the cap is turned. The outer-diameter surface of the cap may be turned without the grinding. This is because the outer-diameter surface of the cap is not necessarily be grinded, since the shaft-end insertion holes of the opposed sidewalls are pressed and thus the precision of the hole is not necessarily high. The outer-diameter surface (raceway surface of the roller) of the middle portion of the shaft main body of the supporting shaft may be grinded.

Moreover, the cap may be forged and pressed instead of the turning. The inner-diameter and outer-diameter surface of the cap may be turned or forged instead of the grinding. This is because a gap between the inner-diameter surface of the shaft-end insertion hole and the outer-diameter surface of the cap is filled due to the thickness increase when the end of the cap is caulked.

The cap may be fitted to the small-diameter shaft end by a tight, middle, or loose fitting manner. For example, the cap may be fitted to the small-diameter shaft end in a fitting manner weaker than a press fitting manner.

It is necessary to caulk the end outer-diameter side of the cap to the inner circumferential side edge of the shaft-end insertion hole. However, the inner-diameter side of the cap is not necessarily caulked to the outer-diameter side edge of the small-diameter shaft end of the shaft main body.

In the case where the inner-diameter side of the cap is caulked to the outer-diameter side edge of the small-diameter shaft end of the shaft main body, the fretting seam is prevented from being generated on the outer-diameter surface of the small-diameter shaft end and the mechanical strength of the shaft main body is more improved. Moreover, in the case where the cap is press-fitted to the small-diameter shaft end, the caulking of the inner-diameter side of the cap may be omitted.

At least one of the outer-diameter surface of the small-diameter shaft end of the shaft main body and the inner-diameter surface of the cap may have a non-circular shape in its circumferential direction to prevent the cap from being rotated. The non-circular shape includes, for example, a flower petal shape, a polygonal shape, and a key groove.

In addition, in Fig. 4 of Patent No. 3508557, disclosed is a construction that a load bearing made of ceramic is fitted to a shaft main body formed in a cylindrical shape by bearing steel, the shaft main body is press-fitted to a arm, and the both ends of the main body is not caulked.

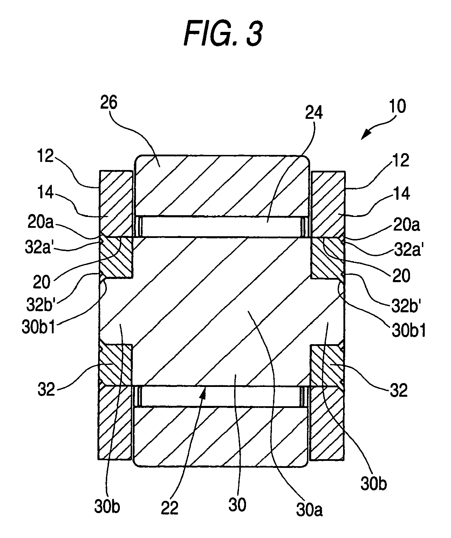

In Fig. 3 of Japanese Utility Model Application Publication No. 2-110210, a construction that a fixing holder with a flange, which has the same hardness as a roller shaft of a cavity, is press-fitted and fixed to a roller retaining portion is disclosed.

In the bearing device according to the present invention, unlike the construction disclosed in the above-described publications, at least one shaft end of the supporting shaft is formed in a small-diameter cylindrical shape and the cap having the same outer diameter as that of the shaft main body is installed in the small-diameter shaft end, separating from the shaft main body. In this construction, a protrusion is not generated on the entire outer-diameter surface of the supporting shaft. Accordingly, the entire construction forms one integral cylindrical body and thus the treatment thereof is easy.

In the bearing device including the above-described construction, in consideration of attachment of an extraneous material or abrasion of the shaft main body of the supporting shaft, a construction having a high hardness and excellent abrasion resistance can be obtained by a high-concentration carburizing process or a nitrifying process. In this case, although the shaft end of the shaft main body has a high hardness, a cap having a low hardness may be fitted to the both shaft ends and caulked to the inner-diameter side edge of the shaft-end insertion hole, thereby preventing the supporting shaft from escaping from the shaft-end insertion hole of the shaft main body. As the result, although the entire shaft main body has a high hardness and extremely excellent abrasion resistance by a high-concentration carburizing process, the limit of the anti-carburizing process for the both shaft ends of the shaft main body is reduced and a low-cost heating process such as a complete quenching can be used, thereby significantly reducing the cost. Furthermore, since the both shaft ends of the shaft main body need not be press-fitted to the shaft-end insertion holes after the complete quenching, the both shaft ends are not broken or cracked by the press fitting, and, since the small-diameter shaft end of the shaft main body need not be annealed after the complete quenching, the cost is reduced.

According to a supporting shaft for a bearing device of the present invention, the both shaft ends are inserted into shaft-end insertion holes provided in a pair of opposed sidewalls for forming a bearing retaining member and which supports a roller at the middle portion thereof between the both opposed sidewalls through a roller, the supporting shaft is made of a steel product subjected to a heating process, and includes a shaft main body having a step shape, in which the outer diameter of at least one of the shaft ends is smaller than that of the middle portion thereof, and a cap which is fitted to a small-diameter shaft end, separating from the shaft main body, and has a hardness by which the end of the cap can be caulked, and the cap has the substantially same outer diameter as that of the middle portion of the shaft main body.

According to the supporting shaft for the bearing device of the present invention, in consideration of attachment of an extraneous material or abrasion of the shaft main body of the supporting shaft, a construction having a high hardness and excellent abrasion resistance can be obtained by a high-concentration carburizing process or a nitrifying process. In this case, although the shaft end of the shaft main body has a high hardness, a cap having a low hardness may be fitted to the both shaft ends and caulked to the inner-diameter side edge of the shaft-end insertion hole, thereby preventing the supporting shaft from escaping from the shaft-end insertion hole of the shaft main body. As the result, although the entire shaft main body has a high hardness and extremely excellent abrasion resistance by a high-concentration carburizing process, the limit of the anti-carburizing process for the both shaft ends of the shaft main body is reduced and a low-cost heating process such as a complete quenching can be used, thereby significantly reducing the cost. Furthermore, since the both shaft ends of the shaft main body need not be press-fitted to the shaft-end insertion holes after the complete quenching, the both shaft ends are not broken or cracked by the press fitting, and, since the small-diameter shaft end of the shaft main body need not be annealed after the complete quenching, the cost is reduced. In addition, since the cap has the same outer diameter as that of the middle portion of the shaft main body, the entire outer diameter of the supporting shaft is constant. Accordingly, the supporting shaft is apt to be inserted into the shaft end insertion hole of one opposed sidewall and the shaft end insertion hole of the other opposed sidewall from the outside of one of the opposed sidewalls and thus the assembling of the bearing device is easy.

According to the present invention, it is possible to provide a bearing device in which a shaft main body of a supporting shaft has a high hardness and excellent abrasion resistance or improved life span by a low-cost heating process, and the ends of the shaft main body are caulked to the inner-diameter side edges of insertion holes to be prevented from escaping from the insertion holes while ensuring a mechanical strength.

### BRIEF DESCRIPTION OF THE DRAWINGS

Fig. 1 is a side view of a rocker arm according to a first embodiment of the present invention;
Fig. 2 is a cross-sectional view taken along line B-B of the rocker arm shown in Fig. 1;
Fig. 3 is a side view of a bearing device according to the present invention;
Fig. 4 is a side view of a shaft main body of a supporting shaft in Fig. 3;
Fig. 5 is a cross-sectional side view of a cap of the supporting shaft in Fig. 3;
Fig. 6 is a cross-sectional view of the supporting shaft in a state that the caps are fitted to the both shaft ends of the shaft main body;
Fig. 7 is a perspective view of the supporting shaft;
Fig. 10 is a cross-sectional view of a planet gear device according to a second embodiment of the present invention.

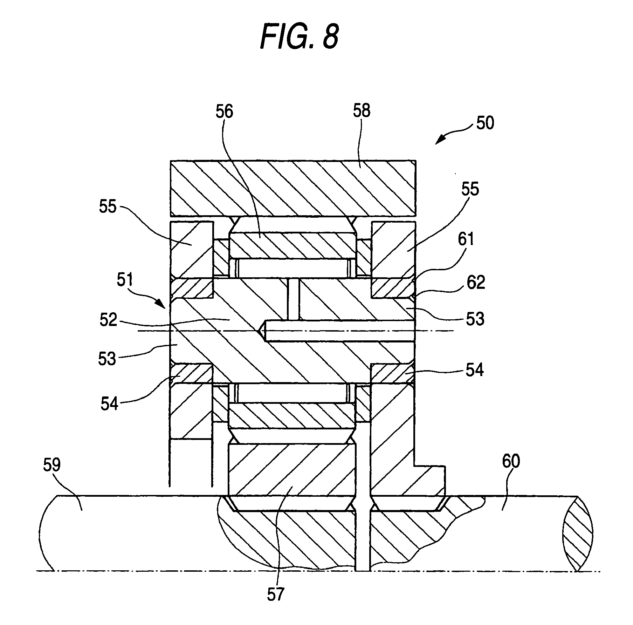

Fig. 8 is a side view of a related rocker arm;
Fig. 9 is a cross-sectional view taken along line A-A of the rocker arm of Fig. 8; and

### DETAILED DESCRIPTION OF THE PREFERRED EMBODIMENTS

### First Embodiment

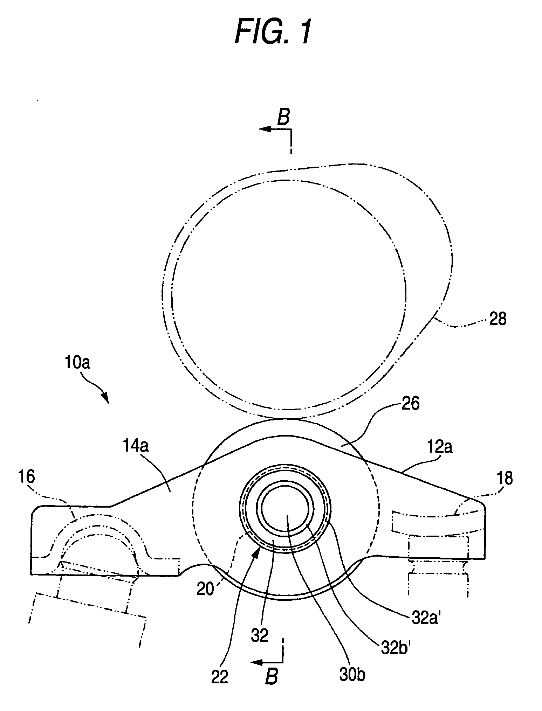

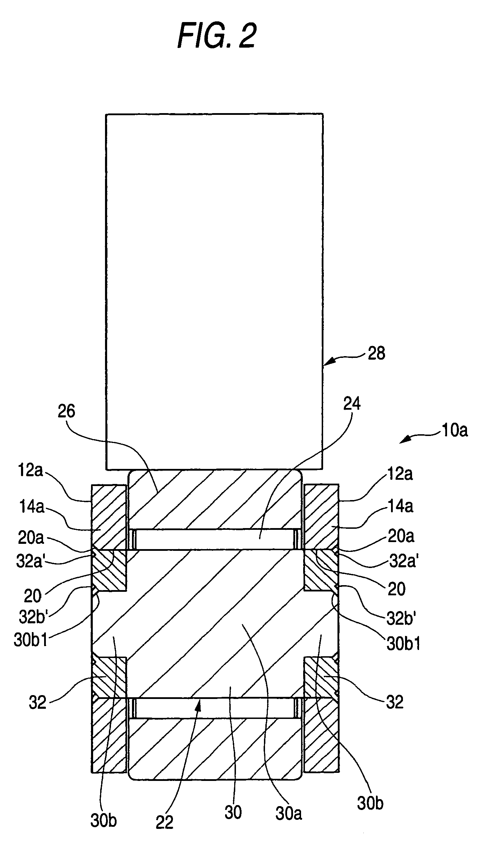

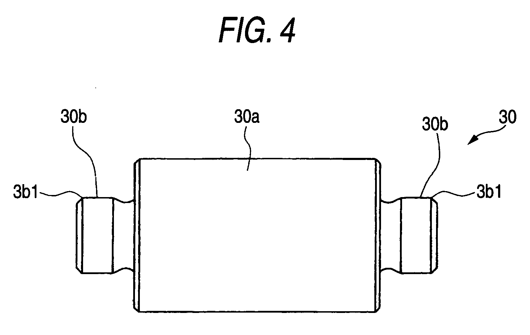

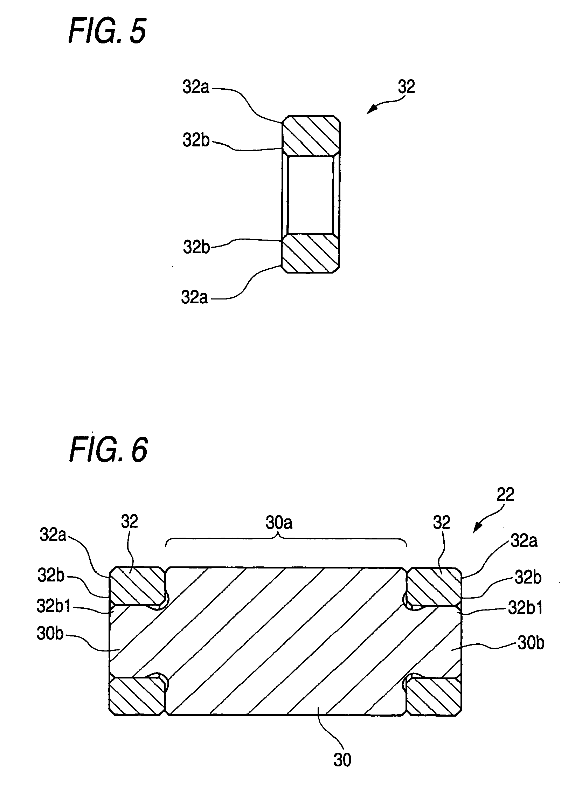

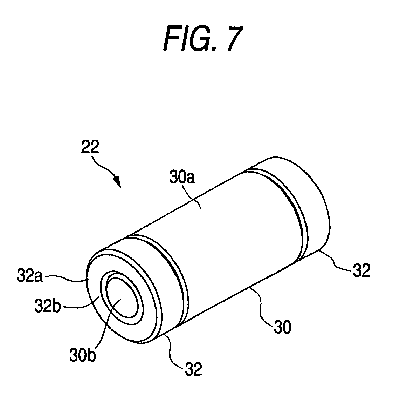

Hereinafter, a rocker arm for a valve operating mechanism of an internal combustion engine according to a first embodiment of the invention will be described with reference to the accompanying drawings. Figs. 3 through 7 illustrate a bearing device and a supporting shaft for the bearing device according to the present invention, and Figs. 1 and 2 illustrate a rocker arm according to the embodiment of the present invention. Fig. 1 is a side view of a rocker arm, Fig. 2 is a cross-sectional view taken along line B-B of the rocker arm of Fig. 1, Fig. 3 is a side view of a bearing device according to the present invention, Fig. 4 is a side view of a shaft main body of a supporting shaft in Fig. 3, Fig. 5 is a cross-sectional side view of a cap of the supporting shaft in Fig. 3, Fig. 6 is a cross-sectional view of the supporting shaft in a state that the cap is fitted to the both shaft ends of the shaft main body, and Fig. 7 is a perspective view of the supporting shaft.

Referring to the drawings, an end pivot type rocker arm 14a according to the present embodiment includes a pair of opposed sidewalls 14a that constitutes a rocker arm body 12a. The both opposed sidewalls 14a are preferably opposed to each other in parallel in the same shape. A lash adjuster receiver (pivot receiver) 16 and a valve stem receiver 18 are provided at opposite sides in the lengthwise direction of the opposed sidewalls 14a, respectively. Shaft-end insertion holes 20 are formed in the middle portions in the lengthwise direction of the opposed sidewalls 14a. The both shaft-end insertion holes 20 are coaxially formed through the opposed sidewalls 14a with a predetermined hole diameter, respectively. Incidentally, the present invention may apply to a center pivot type rocker arm.

The supporting shaft 22 includes both shaft ends which are inserted into the shaft-end insertion holes 20 and is laid across the opposed sidewalls 14a. A roller 26 is rotatably supported on the middle portion of the supporting shaft 22 between the opposed sidewalls 14a through a plurality of needle rollers 24 (including a roller such as a cylindrical roller). The outer circumferential surface of the roller 26 contacts a cam 28.

In the rocker arm 10a, the supporting shaft 22 is constituted by a shaft main body 30 and a cap 32.

The shaft main body 30 is made of any one of various steel products and subjected to an adequate heating process, such that it has a high hardness of, for example, 650 Hv or more and excellent abrasion resistance and improved life span. For example, if the shaft main body is made of bearing steel, complete quenching is preferably performed. If the shaft main body is made of carburized steel, carburizing quenching is preferably performed. If the shaft main body is made of stainless steel or tool steel, a nitrifying process is preferably performed. In the shaft main body 30, a middle portion 30a is positioned between the both opposed sidewalls 14, and the outer-diameter surface of the middle portion 30a is a raceway surface around which the needle rollers 24 roll. The outer diameters of the both shaft ends 30b of the shaft main body 30 are smaller than that of the middle portion 30a. Accordingly, the shaft main body 30 has a cylindrical step shape in which the both shaft ends have small diameter.

The cap 32 has a cylindrical shape having inner and outer diameters by which the cap can be fitted to the small-diameter shaft end 30b of the shaft main body 30 and the shaft-end insertion hole 20, respectively, by any of a tight, transition, or loose fitting manner. The caps 32 may be fitted to the small-diameter shaft ends 30b of the shaft main body 30 in a fitting manner weaker than a press fitting manner. An end outer-diameter side 32a is caulked to an inner-diameter side edge 20a of the shaft-end insertion hole 20 and an end inner-diameter side 32b is caulked to an outer-diameter side edge 30b1 of the small-diameter shaft end 30b. In Figs. 1 and 2, 32a' denotes a caulked portion in which the end outer-diameter side 32a of the cap 32 is caulked, and 32b' denotes a caulked portion in which the end inner-diameter side 32b of the cap 32 is caulked.

The cap 32 is made of a material having a hardness by which the end thereof is caulked, preferably 100 to 400 Hv, and more preferably, 150 to 350 Hv. Although the material or the heating condition of the cap is not limited, the cap may be made of, for example, quenched and tempered steel, mild steel, aluminum, brass, or the like. For example, if the cap 32 is made of quenched and tempered steel, the quenched and tempered steel may not be quenched.

In the rocker arm 10a according to the above-described embodiment, the supporting shaft 22 is constituted by the shaft main body 30 and the cap 32, and thus the shaft main body 30 including the small-diameter shaft ends 30b can be subjected to a low-cost heating process and the hardness or the abrasion resistance can increase and the life span can be improved. Furthermore, when the supporting shaft 22 is inserted into the both opposed sidewalls 14, that is, in the state in which the small-diameter shaft ends 30b of the shaft main body 30 to which the caps 32 are fitted are inserted into the shaft-end insertion holes 20 of the both opposed sidewalls 14, that the supporting shaft 22 can be caulked and fixed to the shaft-end insertion hole 20 by caulking the end outer-diameter side 32a of the cap 32 to the inner-diameter side 20a of the insertion hole 20 because the cap 32 has a low hardness which allows the end thereof to be caulked. As the result, in the supporting shaft 22 according to the present embodiment, when the entire shaft main body 30 is subjected to the heating process such as the high-concentration carburizing process, the small-diameter shaft ends 30b of the shaft main body 30 need not be subjected to an anti-carburizing process, and thus the shaft main body 30 is subjected to the low-cost heating process such as complete quenching with a high hardness and thus a cost is reduced.

### Second Embodiment

A construction applied to a gear supporting shaft 51 of a planet gear device 50 according to a second embodiment of the present invention is shown in Fig. 8.

By caulking and fixing the ends of caps 54 which are inserted into small-diameter shaft ends 53 of a shaft main body 52 to carriers of opposed sidewalls 55, the same effect as the first embodiment can be obtained.

In Fig. 10, 56 denotes a planet gear, 57 denotes a sun gear, 58 denotes an inner gear, 59 denotes a first rotary shaft, 60 denotes a second rotary shaft, 61 denotes a caulking portion of the cap 53 for the opposed sidewall 55, and 62 denotes a caulking portion of the cap 54 for the shaft main body 52.

Furthermore, the present invention is not limited to the above-described embodiments and various changes in form and details may be made therein without departing from the spirit and scope of the invention as defined by the appended claims.

## Claims

1. A bearing device comprising:
a bearing retaining member including a pair of opposed sidewalls and shaft-end insertion holes which are formed through the pair of opposed sidewalls so as to be coaxially with each other;
a supporting shaft passed through the shaft-end insertion holes, the supporting shaft including:
a shaft main body that is made of a steel product subjected to a heating process and includes a middle portion and a small-diameter end portion in which an end of the supporting shaft has a diameter smaller than that of the middle portion; and
a cap that is separated from the shaft main body, made of a material which has a hardness smaller than that of the shaft main body and fitted to the small-diameter end portion, and includes an end outer-diameter side edge which is caulked to the shaft-end insertion hole to be fixed to the opposite sidewalls; and
a roller supported by the middle portion through a plurality of roller elements.

2. The bearing device according to claim 1, an inner-diameter side of the end of the cap is caulked to an outer-diameter side edge of the small-diameter end portion.

3. The bearing device according to claim 1, wherein the bearing device is a rocker arm.

4. The bearing device according to claim 1, wherein the bearing device is a planet gear.

5. The bearing device according to claim 1, wherein the shaft main body is made of the steal material having a hardness of 650Hv or more, ad the cap is made of the material having a hardness of 100Hv to 400Hv.

6. The bearing device according to claim 1, wherein the cap has an outer diameter substantially equal to an outer diameter of the middle portion of the shaft main body.

7. A supporting shaft for a bearing device, the supporting shaft comprising:
a shaft main body that is made of a steel product subjected to a heating process and includes a middle portion and a small-diameter end portion in which an end of the supporting shaft has a diameter smaller than that of the middle portion; and
a cap that is separated from the shaft main body, made of a material which has a hardness smaller than that of the shaft main body and fitted to the small-diameter end portion, and includes an end outer-diameter side edge having a hardness which allows the end outer-diameter side edge to be caulked,
wherein the cap has an outer diameter substantially equal to an outer diameter of the middle portion of the shaft main body.

8. The supporting shaft according to claim 7, wherein the supporting shaft is a supporting shaft for a rocker arm.

9. The supporting shaft according to claim 7, wherein the supporting shaft is a supporting shaft for a planet gear.

10. The supporting shaft according to claim 7, wherein the shaft main body is made of the steal material having a hardness of 650Hv or more, ad the cap is made of the material having a hardness of 100Hv to 400Hv.
